# EUROPÄISCHE PATENTSCHRIFT

(11) **EP 3 995 199 B1**
(45) Veröffentlichungstag und Bekanntmachung des Hinweises auf die Patenterteilung: **28.12.2022**
(21) Anmeldenummer: 20205875.6
(22) Anmeldetag: 05.11.2020
(51) Int. Cl.: B01D 46/00, B01D 46/10, B01D 46/24, B01D 46/52

(54) **FILTER UND LUFTREINIGUNGSGERÄT**
FILTER AND AIR PURIFICATION DEVICE
FILTRE ET APPAREIL DE PURIFICATION D'AIR

(43) Veröffentlichungstag der Anmeldung: 11.05.2022
(73) Patentinhaber: Carl Freudenberg KG, 69469 Weinheim (DE)
(72) Erfinder: Schumacher, Sascha, 69483 Wald-Michelbach (DE); Schmitt, Thorsten, 69469 Weinheim (DE); Häfner, Uwe, 77964 Kehl (DE); Wingender, Judith, 69469 Weinheim (DE)

(56) Entgegenhaltungen:
- WO-A1-2010/088782
- DE-A1-102012 209 961
- DE-A1-102015 105 059
- DE-U1-202018 006 399

## Beschreibung

Die Erfindung betrifft einen Filter zum Reinigen eines Luftstroms mit mindestens einem Filtermedium und einem Rahmen zur Aufnahme des Filtermediums und betrifft auch ein Luftreinigungsgerät mit einem solchen Filter.

### Stand der Technik

Aus dem Stand der Technik sind die unterschiedlichsten Filter zur Filtration von Luftströmen bekannt, wie sie z.B. in Klimaanlagen, Luftreinigern, Staubsaugern, etc. zur Anwendung kommen. Um eine größere wirksame Filterfläche zu erreichen wird das Filtermedium üblicher Weise mehrfach gefaltet, insbesondere plissiert. Ein Beispiel für ein plissiertes, kreisförmiges Filterelement ist in der EP 1 213 045 B1 dargestellt.

In vielen Bereichen der Technik werden Filterpatronen eingesetzt, beispielsweise um Abluft zu reinigen, und um zu verhindern, dass Partikel in Gebläse, Ventilatoren oder dergleichen oder in einen von Menschen frequentierten Raum gelangen. Solche Filterpatronen werden in Halterungen, also Filteraufnahmen, eingesetzt und daran fixiert. Häufig haben Filterpatronen eine zylindrische Form, wie beispielsweise in der DE 20 2016 005 074 U1 beschrieben. Grundsätzlich sind aber z.B. auch kegelstumpfförmige Filterpatronen denkbar.

Nachteilig bei derartigen Filtern und Filterpatronen ist, dass beim händischen Austauschen der Filter bzw. Filterpatronen durch einen Nutzer ein Kontakt mit den sich auf der Oberfläche des Filtermediums befindlichen Partikeln oder Allergenen erfolgen kann, was zu Irritationen auf der Haut des Nutzers führen kann.

Wird vom Nutzer Schutzausrüstung getragen, insbesondere Handschuhe, so kann dadurch die Handhabung des Filters erschwert werden.

Die DE 20 2018 006 399 U1 zeigt eine Filterpatrone für eine Luftfiltervorrichtung, welche eine schlauchförmige Schutzumhüllung aufweist, welche einen gewissen Schutz vor Verschmutzung einer handhabenden Person bietet.

### Aufgabenstellung

Aufgabe der vorliegenden Erfindung ist es einen Filter und ein Luftreinigungsgerät mit einem solchen Filter zu schaffen, welcher eine gute Handhabung aufweist und Nutzer beim Wechseln des Filters vor dem Kontakt mit auf der Filteroberfläche angesammelten Substanzen (Partikel, Allergene, etc.) zu schützen.

### Technische Lösung

Gelöst wird diese Aufgabe durch einen Filter, wie er nachfolgend beschrieben und beansprucht ist.

Erfindungsgemäß wurde als vorteilhaft erkannt an dem Filter eine Verschließvorrichtung vorzusehen, welche einen Kontakt des Nutzers mit dem Filtermedium verhindert.

Der Filter dient zum Reinigen eines Luftstroms und besitzt mindestens ein von dem zu reinigenden Luftstrom durchströmtes Filtermedium und einen Rahmen zum Halten und Stabilisieren des Filtermediums.

Erfindungsgemäß ist an dem Rahmen eine Verschließvorrichtung vorgesehen zum Abdecken des Filtermediums. Die Verschließvorrichtung kann von einem Nutzer betätigt werden, nämlich dann, wenn der Filter gewechselt und/oder entsorgt werden muss. Durch die Betätigung wird die Verschließvorrichtung in eine Stellung verbracht, in welcher das Filtermedium abgedeckt wird. Auf diese Weise wird ein Kontakt des Nutzers mit dem Filtermedium verhindert. Erfindungsgemäß besitzt die Verschließvorrichtung mindestens ein Abdeckelement, welches von einer geöffneten Stellung während des Betriebs in eine geschlossene Stellung zum Wechseln des Filters verbringbar ist. In vorteilhafter Weise wird das mindestens eine Abdeckelement durch eine Mehrzahl von schwenkbaren Lamellen gebildet. Die Lamellen können eine geöffnete Stellung während des Betriebs des Filters und eine geschlossene Stellung zum Wechseln des Filters einnehmen.

Bevorzugt ist, wenn die Verschließvorrichtung mindestens ein Betätigungselement besitzt zum Verbringen des mindestens einen Abdeckelements von seiner geöffneten in seine geschlossene Stellung.

In einer möglichen Ausführungsform des Filters ist das mindestens eine Betätigungselement als mindestens ein Rahmenaufsatz mit Kulissensteuerung ausgebildet und in dem mindestens einen Rahmenaufsatz ist eine Mehrzahl von Kulissen eingebracht, z.B. in Form von Nuten, wobei an jeder Lamelle mindestens ein Kulissenstein angebracht ist, z.B. in Form von Zapfen, und ein jeweiliger Kulissenstein je in eine zugeordnete Kulisse eingreift. Durch die Betätigung der Kulissensteuerung, nämlich durch Bewegen des mindestens einen Rahmenaufsatzes relativ zum Rahmen, erfolgt ein Verbringen der Lamellen von ihrer geöffneten Stellung in ihre geschlossene Stellung.

Dabei können die Lamellen an dem Rahmen angelenkt, d.h. drehbar gelagert sein. Dies kann unter Vorsehung von Gelenken zwischen einer jeweiligen Lamelle und dem Rahmen erfolgen. So können die Lamellen beispielsweise mit Bolzen bzw. Stiften oder Zapfen und der Rahmen mit Bohrungen versehen sein, wobei die Bolzen in den Bohrungen drehbar aufgenommen werden.

In Weiterbildung des Filters können die Lamellen an mindestens einer ihrer Außenkanten mit einer Dichtlippe versehen sein. Dadurch wird sichergestellt, dass die Lamellen in ihrer geschlossenen Stellung gut abdichten und keine Partikel nach außen dringen können. Wenn die Lamellen als rechteckige Platten ausgeführt sind, so können die Dichtlippen an drei der vier Außenkanten einer jeweiligen Lamelle angeordnet sein, was eine besonders gute Abdichtung einer Lamelle gegenüber benachbarten Lamellen sowie gegenüber dem Betätigungselement bewirkt.

In einer Variante des Filters ist dieser als Filterpatrone und der Rahmen ist als Boden und als mit einer mittigen Ausnehmung versehener Deckel ausgebildet. Mindestens ein Filtermedium ist zwischen Boden und Deckel angeordnet und umhüllt einen Innenraum. Bei dieser Variante genügt es, die Filterpatrone an ihrer äußeren Mantelfläche durch Abdeckelemente einer Verschließvorrichtung abdecken zu können.

In Weiterbildung der Filterpatrone weisen der Boden und der Deckel jeweils eine kreisrunde Form auf und zwei Rahmenaufsätze sind in Kreisringform ausgeführt. Dabei ist dem Boden und dem Deckel je ein kreisringförmiger Rahmenaufsatz zugeordnet und die Rahmenaufsätze sind konzentrisch zum Rahmen bzw. Deckel und radial außen angrenzend am Boden bzw. Deckel gelagert. D.h. der Außenradius des Bodens bzw. Deckels entspricht in etwa dem Innenradius des zugeordneten Rahmenaufsatzes, welcher dann auch als Außenring bezeichnet werden kann. Die Rahmenaufsätze sind relativ drehbar zum Rahmen bzw. Deckel und durch die Drehbewegung erfolgt eine Betätigung der Verschließvorrichtung.

In Weiterbildung des Filters weist das Betätigungselement der Verschließvorrichtung mindestens ein Griffelement auf, z.B. einen Hebel, mehrere Nasen oder eine geriffelte oder gewellte Oberfläche.

In einer vorteilhaften Ausführung des Filters ist das mindestens eine Filtermedium plissiert und bildet einen Faltenbalg. So wird eine große Filtrationsfläche erreicht.

Die Erfindung betrifft auch ein Luftreinigungsgerät mit einem wie vorstehend beschriebenen Filter und einer Filteraufnahme zur Aufnahme des Filters. Das Luftreinigungsgerät kann beispielsweise als Raumluftreiniger oder Reinigungsaggregat in der Lebensmittelindustrie ausgeführt sein.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll anhand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1a: eine erste Ausführungsform eines Filters in einer geöffneten Stellung
- Fig. 1b: eine erste Ausführungsform eines Filters in einer geschlossenen Stellung
- Fig. 2a: eine zweite Ausführungsform eines Filters
- Fig. 2b: die Aufnahme des Filters aus Fig. 2 a in einem Luftreinigungsgerät.

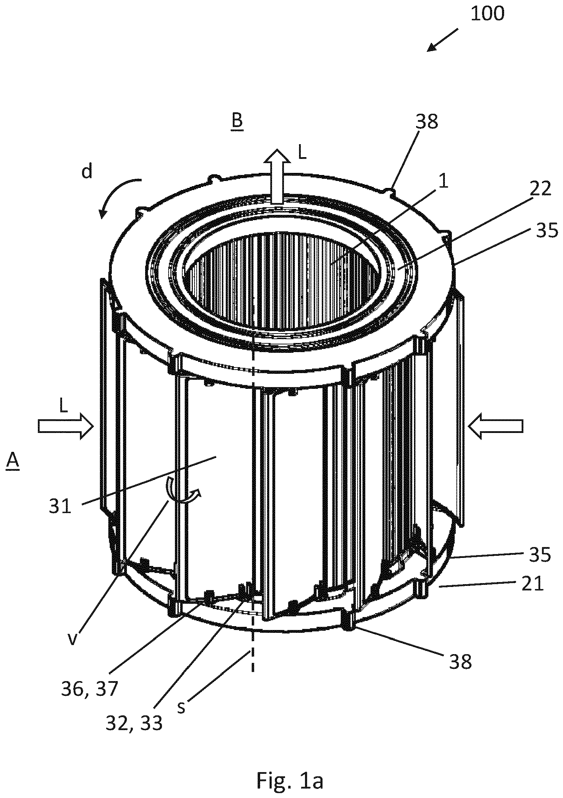

In Fig. 1a ist ein Filter 100 in Form einer Filterpatrone dargestellt. Der Filter 100 besitzt einen Boden 2.1 und einen Deckel 2.2, welche gemeinsam einen Rahmen 2 bilden. Zwischen Boden 2.1 und Deckel 2.2 ist ein Filtermedium 1 aufgenommen, welches einen Hohlraum umhüllt. Das Filtermedium 1 ist plissiert und weist daher eine große Filtrationsfläche auf. Ein zu filternder Luftstrom L tritt an der Mantelfläche des zylindrischen Filters 100 in den Filter 100 ein, passiert das Filtermedium 1, wird dabei gereinigt und verlässt den Filter 100 wieder durch eine Ausnehmung im Deckel 2.2. Der Luftstrom L ist in Fig. 1a mit Pfeilen dargestellt und bewegt sich von der Rohgasseite A des Filters zur Reingasseite B des Filters 100.

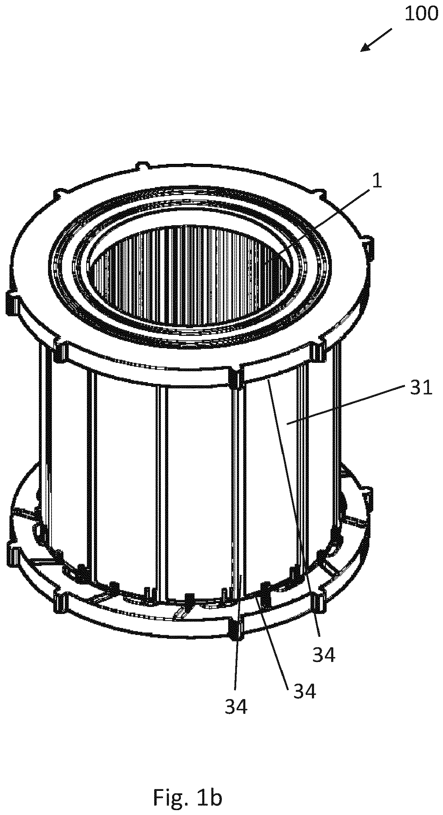

Der Filter 100 besitzt auch eine Verschließvorrichtung 3, welche dazu dient das Filtermedium 1 abzudecken, sodass ein Benutzer nicht in Kontakt mit dem Filtermedium 1 kommen kann. In der Darstellung von Fig. 1a wird das Filtermedium 1 nicht durch die Verschließvorrichtung 3 abgedeckt. In der Darstellung von Fig. 1b wird das Filtermedium 1 hingegen von der Verschließvorrichtung 3 abgedeckt.

Die Verschließvorrichtung 3 besitzt als Abdeckelemente eine Vielzahl von Lamellen 31, welche sich in Fig. 1a in einer geöffneten Stellung befinden. Die Lamellen 31 werden von Rahmenaufsätzen 35 gehalten. Die Rahmenaufsätze 35 sind jeweils als Außenringe zum Boden 2.1 und zum Deckel 2.2 ausgeführt und konzentrisch und relativ drehbar zum Boden 2.1 und zum Deckel 2.2 angeordnet. Die in den Rahmenaufsätzen 35 gelagerten Lamellen 31 können durch eine Verschwenkbewegung v um eine Schwenkachse s von ihrer geöffneten Position - wie in Fig. 1a dargestellt - in ihre geschlossene Position - wie in Fig. 1b dargestellt - verbracht werden. Die Rahmenaufsätze 35 dienen dabei als Betätigungselemente, um die Verschwenkbewegung v zu veranlassen. Dazu sind die Rahmenaufsätze 35 mit Kulissen 36 versehen, in welchen mit den Lamellen 31 verbundene Kulissensteine 37 im Sinne einer Kulissensteuerung geführt werden. Eine jeweilige Lamelle 31 verfügt an ihrem oberen und an ihrem unteren Ende jeweils über einen Bolzen 32, welcher in einer komplementären Bohrung 33 im jeweiligen Rahmenaufsatz 35 gelagert ist. Die Schwenkachse s einer jeweiligen Lamelle geht jeweils durch die Bolzen 32 diese Lamelle 31. Durch eine Drehbewegung d der Rahmenaufsätze 35 relativ zum Boden 2.1 und zum Deckel 2.2. erfahren die Lamellen 31 über die Kulissensteuerung ihre Verschwenkbewegung v.

Um die Rahmenaufsätze 35 griffiger zu gestalten und die Drehbewegung d durch den Nutzer zu vereinfachen, sind die Rahmenaufsätze 35 mit einer Mehrzahl von hervorstehenden Nasen 38 als Griffelemente versehen.

Wie in Fig. 1b gezeigt ist eine jeweilige Lamelle 31 an den äußeren Kanten mit Dichtlippen 34 versehen. Die obere Dichtlippe 34 dichtet eine jeweilige Lamelle gegenüber dem oberen Rahmenaufsatz 35 ab. Die untere Dichtlippe 34 dichtet eine jeweilige Lamelle 31 gegenüber dem unteren Rahmenaufsatz 35 ab. Die an der langen Kante an der jeweiligen Lamelle 31 angebrachte Dichtlippe 34 dichtet diese gegenüber der benachbarten Lamelle 31 ab. So wird sichergestellt, dass durch die Verschließvorrichtung 3 das Filtermedium 1 gut abgedeckt wird und ein Kontakt eines Nutzers mit sich auf dem Filtermedium 1 befindlichen Partikeln, wie insbesondere Allergenen, zuverlässig verhindert wird.

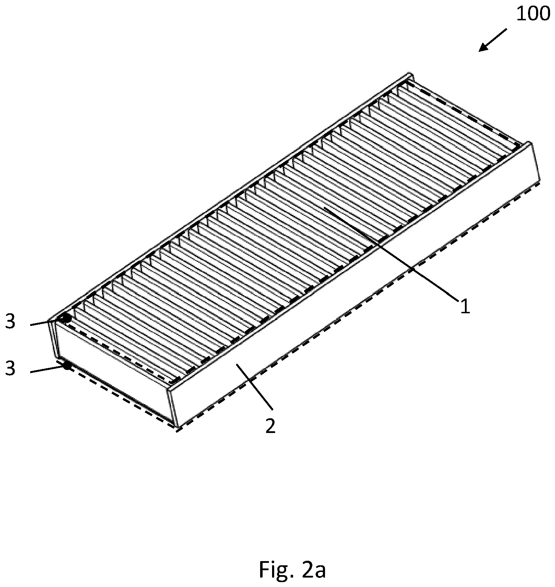

Fig. 2a zeigt eine alternative Ausführungsvariante eines Filters 100. Der Filter 100 besitzt eine Quaderform, wie sie beispielsweise für die Verwendung in der Belüftung von Fahrzeuginnenräumen Verwendung findet. Ein plissiertes Filtermedium 1 bildet einen quaderförmigen Faltenbalg, welcher von einem Rahmen 2 eingefasst wird. Der Rahmen 2 kann dabei von einem Kantenband gebildet werden. Auf seiner Oberseite und auf seiner Unterseite ist der Filter 100 jeweils mit einer Verschließvorrichtung 3 versehen, deren Position und Außenkontur jeweils durch eine gestrichelte Linie angedeutet ist. Die Verschließvorrichtungen 3 können dabei beispielsweise unter Verwendung von Klappen, Lamellen oder Rollos ausgeführt sein.

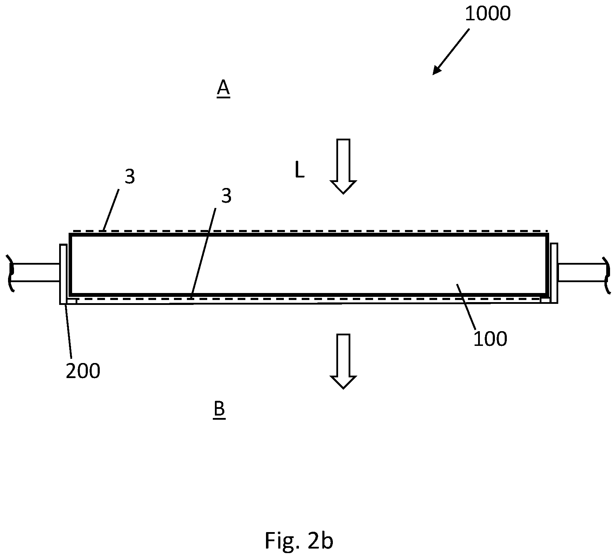

Wie in der Schnittansicht von Fig. 2b schematisch dargestellt, kann der Filter 100 in einer Filteraufnahme 200 eingesetzt und zusammen mit dieser in ein Luftreinigungsgerät 1000 integriert sein. In dem Luftreinigungsgerät 1000 wird der Filter 100 von einem Luftstrom L durchströmt, wobei die Luft des Luftstroms L gereinigt wird, während sie sich von der Rohgasseite A zur Reingasseite B des Filters 100 durch das Filtermedium 1 bewegt.

Für die Ausführungsvariante gemäß der Figuren 1a und 1b wie auch für die Ausführungsvariante gemäß der Figuren 2a und 2b gilt:
Bevor ein Filter 100 von einem Nutzer aus der Filteraufnahme 200 eines Luftreinigungsgeräts 1000 entnommen wird, kann die Verschließvorrichtung 3 betätigt werden, um ein Abdecken des Filtermediums 1 zu bewirken und so den Kontakt des Nutzers mit dem Filtermedium 1 zu verhindern.

### Bezugszeichenliste

- 1: Filtermedium
- 2: Rahmen
- 3: Verschließvorrichtung

- 21: Boden
- 22: Deckel

- 31: Lamelle (Abdeckelement)
- 32: Bolzen
- 33: Bohrung
- 34: Dichtlippe
- 35: Rahmenaufsatz (Betätigungselement)
- 36: Kulisse
- 37: Kulissenstein
- 38: Nase (Griffelement)

- 100: Filter
- 200: Filteraufnahme

- 1000: Luftreinigungsgerät

- d: Drehbewegung
- v: Verschwenkbewegung
- s: Schwenkachse

- A: Rohgasseite des Filters
- B: Reingasseite des Filters
- L: Luftstrom

## Patentansprüche

1. Filter (100) zum Reinigen eines Luftstroms (L) mit mindestens einem Filtermedium (1) und einem Rahmen (2) zur Aufnahme des Filtermediums (1) wobei an dem Rahmen (2) eine Verschließvorrichtung (3) vorgesehen ist zum Abdecken des Filtermediums (1)wobei die Verschließvorrichtung (3) mindestens ein Abdeckelement (31) besitzt, welches von einer geöffneten Stellung in eine geschlossene Stellung verbringbar (v) ist **dadurch gekennzeichnet, dass**
das mindestens eine Abdeckelement durch eine Mehrzahl von schwenkbaren Lamellen (31) gebildet wird.

2. Filter nach Anspruch 1 **dadurch gekennzeichnet, dass**
die Verschließvorrichtung (3) mindestens ein Betätigungselement (35) besitzt zum Verbringen (v) des mindestens einen Abdeckelements (31) von seiner geöffneten in seine geschlossene Stellung.

3. Filter nach Anspruch 2, **dadurch gekennzeichnet, dass**
das mindestens eine Betätigungselement als mindestens ein Rahmenaufsatz (35) ausgebildet ist und in mindestens einem Rahmenaufsatz (35) eine Mehrzahl von Kulissen (36) eingebracht ist,
dass an jeder Lamelle (31) mindestens ein Kulissenstein (37) angebracht ist und ein jeweiliger Kulissenstein (37) je in eine zugeordnete Kulisse (36) eingreift.

4. Filter nach einem der vorangehenden Ansprüche **dadurch gekennzeichnet, dass**
die Lamellen (31) an dem Rahmen (2) angelenkt sind.

5. Filter nach einem der vorangehenden Ansprüche, **dadurch gekennzeichnet, dass**
die Lamellen (31) an mindestens einer ihrer Außenkanten mit einer Dichtlippe (34) versehen sind.

6. Filter nach einem der vorangehenden Ansprüche **dadurch gekennzeichnet, dass**
der Filter (100) als Filterpatrone und der Rahmen (2) als Boden (2.1) und als mit einer mittigen Ausnehmung versehener Deckel (2.2) ausgebildet ist und,
dass mindestens ein Filtermedium (1) zwischen Boden (2.1) und Deckel 82.2) angeordnet ist und einen Innenraum umhüllt.

7. Filter nach Anspruch 6 **dadurch gekennzeichnet, dass**
der Boden (2.1) und der Deckel (2.2) jeweils eine kreisrunde Form aufweisen und zwei Rahmenaufsätze (35) in Kreisringform ausgeführt sind.

8. Filter nach einem der Ansprüche 2 bis 7, **dadurch gekennzeichnet, dass** das Betätigungselement (35) mindestens ein Griffelement (38) aufweist.

9. Filter nach einem der vorangehenden Ansprüche, **dadurch gekennzeichnet, dass**
das mindestens eine Filtermedium (1) plissiert ist.

10. Luftreinigungsgerät (1000), insbesondere Raumluftreiniger mit einem Filter (100) nach einem der vorangehenden Ansprüche und einer Filteraufnahme (200) zur Aufnahme des Filters (100).

## Claims

1. Filter (100) for cleaning an air stream (L), having at least one filter medium (1) and having a frame (2) for receiving the filter medium (1), wherein provision is made on the frame (2) of a closure device (3) for covering the filter medium (1), wherein the closure device (3) has at least one cover element (31) which can be moved (v) from an open position into a closed position, **characterized in that**
the at least one cover element is formed by a plurality of pivotable lamellae (31).

2. Filter according to Claim 1, **characterized in that** the closure device (3) has at least one actuating element (35) for moving (v) the at least one cover element (31) from its open position into its closed position.

3. Filter according to Claim 2, **characterized in that** the at least one actuating element is in the form of at least one frame attachment (35) and a plurality of slotted guides (36) is formed in at least one frame attachment (35),
**in that** at least one sliding block (37) is attached to each lamella (31) and a respective sliding block (37) engages in each case into an assigned slotted guide (36).

4. Filter according to one of the preceding claims, **characterized in that**
the lamellae (31) are articulated on the frame (2).

5. Filter according to one of the preceding claims, **characterized in that**
the lamellae (31) are provided with a sealing lip (34) on at least one of their outer edges.

6. Filter according to one of the preceding claims, **characterized in that**
the filter (100) is in the form of a filter cartridge and the frame (2) is in the form of a base (2.1) and in the form of a top cover (2.2) which is provided with a central cutout, and
**in that** at least one filter medium (1) is arranged between base (2.1) and top cover (2.2) and encloses an interior space.

7. Filter according to Claim 6, **characterized in that** the base (2.1) and the top cover (2.2) each have a circular shape, and two frame attachments (35) are of circular ring shape.

8. Filter according to one of Claims 2 to 7, **characterized in that**
the actuating element (35) has at least one grip element (38).

9. Filter according to one of the preceding claims, **characterized in that**
the at least one filter medium (1) is pleated.

10. Air-cleaning unit (1000), in particular room-air cleaner, having a filter (100) according to one of the preceding claims and having a filter receptacle (200) for receiving the filter (100).

## Revendications

1. Filtre (100) de purification d'un flux d'air (L), ledit filtre comprenant au moins un milieu filtrant (1) et un cadre (2) destiné à recevoir le milieu filtrant (1), un dispositif de fermeture (3) étant prévu sur le cadre (2) pour recouvrir le milieu filtrant (1), le dispositif de fermeture (3) possédant au moins un élément de recouvrement (31) qui peut être amené (v) d'une position ouverte à une position fermée, **caractérisé en ce que** l'au moins un élément de recouvrement est formé par une pluralité de lamelles pivotantes (31).

2. Filtre selon la revendication 1, **caractérisé en ce que** le dispositif de fermeture (3) possède au moins un élément d'actionnement (35) destiné à amener (v) l'au moins un élément de recouvrement (31) de sa position ouverte à sa position fermée.

3. Filtre selon la revendication 2, **caractérisé en ce que**
l'au moins un élément d'actionnement est conçu comme au moins une monture de cadre (35) et une pluralité de coulisses (36) sont introduites dans au moins une monture de cadre (35),
au moins un coulisseau (37) est fixé à chaque lamelle (31) et un coulisseau respectif (37) s'engage dans une coulisse associée (36).

4. Filtre selon l'une des revendications précédentes, **caractérisé en ce que**
les lamelles (31) sont reliées de manière articulée au cadre (2).

5. Filtre selon l'une des revendications précédentes, **caractérisé en ce que**
les lamelles (31) sont munies, au niveau d'au moins un de leurs bords extérieurs, d'une lèvre d'étanchéité (34) .

6. Filtre selon l'une des revendications précédentes, **caractérisé en ce que**
le filtre (100) est conçu comme une cartouche filtrante et le cadre (2) est conçu comme une base (2.1) et comme un couvercle (2.2) pourvu d'un évidement central et,
au moins un milieu filtrant (1) est disposé entre le fond (2.1) et le couvercle 82.2) et entoure un espace intérieur.

7. Filtre selon la revendication 6, **caractérisé en ce que**
le fond (2.1) et le couvercle (2.2) présentent chacun une forme circulaire et deux attaches de cadre (35) sont réalisées sous la forme d'un anneau circulaire.

8. Filtre selon l'une des revendications 2 à 7, **caractérisé en ce que** l'élément d'actionnement (35) comporte au moins un élément de préhension (38).

9. Filtre selon l'une des revendications précédentes, **caractérisé en ce que**
l'au moins un milieu filtrant (1) est plissé.

10. Appareil de purification d'air (1000), en particulier purificateur d'air ambiant, comprenant un filtre (100) selon l'une des revendications précédentes et un porte-filtre (200) destiné à recevoir le filtre (100) .
